# EUROPEAN PATENT SPECIFICATION

(11) **EP 3 840 361 B1**
(45) Date of publication and mention of the grant of the patent: **10.05.2023**
(21) Application number: 20803433.0
(22) Date of filing: 03.03.2020
(51) Int. Cl.: H04N 5/232, H04N 5/225, H04N 5/265, H04N 5/247, G03B 37/02, G03B 35/04

(54) **PHOTOGRAPHING METHOD AND DEVICE, AND COMPUTER-READABLE STORAGE MEDIUM**
FOTOGRAFIERVERFAHREN UND -VORRICHTUNG SOWIE COMPUTERLESBARES SPEICHERMEDIUM
PROCÉDÉ ET DISPOSITIF DE PHOTOGRAPHIE, ET SUPPORT DE STOCKAGE LISIBLE PAR ORDINATEUR

(30) Priority: 24.10.2019 CN 201911016880
(43) Date of publication of application: 23.06.2021
(73) Proprietor: Shenzhen Transsion Holdings Co., Ltd., Shenzhen (CN)
(72) Inventor: XIAO, Ming, Shenzhen, Guangdong 518057 (CN); LI, Lingzhi, Shenzhen, Guangdong 518057 (CN); WANG, Haibin, Shenzhen, Guangdong 518057 (CN); LI, Yang, Shenzhen, Guangdong 518057 (CN)
(74) Representative: Elzaburu S.L.P.
(86) International application number: PCT/CN2020/077663
(87) International publication number: WO 2021/077650

(56) References cited:
- EP-A1- 2 819 386
- CN-A- 101 472 119
- CN-A- 103 167 227
- CN-A- 108 833 621
- CN-A- 109 194 875
- CN-A- 109 639 975
- CN-A- 109 889 709
- CN-A- 109 889 709
- CN-A- 110 177 217
- CN-A- 110 213 414
- CN-A- 110 278 366
- CN-A- 110 740 260
- CN-B- 105 120 179
- JP-A- 2002 122 425

## Description

### Technical field

The present application relates to the technical field of smart terminals and, in particular, to a capturing method, a capturing apparatus, and a computer-readable storage medium.

### Background

With the development in terminal technologies, mobile terminals are becoming increasingly popular, and the capturing capabilities of the mobile terminals have become the focus of many consumers. Nowadays, mobile terminals with a single rear camera can fulfill the needs of consumers for daily capturing. However, in some occasions where a photo needs to be taken such that a principal object is in focus while other objects in the capturing frame are blurred, a camera with a large aperture and a suitable distance will be necessary. However, in mobile terminals, limitations in the specifications and craftsmanship of the cameras make it impossible to produce a camera that fully meets the requirements.

CN105120179B discloses a photographing method and a device thereof. The method uses a sliding camera that can be moved to flexibly view when the photographing device cannot be moved.

EP2819386A1 discloses a mobile device that includes a fixed camera fixedly installed on a rear housing of the mobile device, and a movable camera connected to the fixed camera through a connection component, where the connection component enables the relative position of the two cameras to be adjustable, thus enabling the mobile device to shoot a stereoscopic image at any shooting angle.

### Summary

At present, the industry has proposed using a camera array to solve the above problems (typically dual rear cameras). Two cameras can capture multiple images of the same scene from different angles simultaneously. Based on the image subject and depth of field information obtained separately from the multiple images, the background can be blurred out to get a photo with blurring effects. Such an approach can prolong the software calibration time for the camera, diminishing the photographing efficiency.

Embodiments of the present application provide capturing methods which can capture multiple photos from different positions through at least one lift-able camera, thereby reducing the software calibration time of the camera and improving the efficiency of photographing. The present invention is set out in the appended set of claims.

In a first non-claimed aspect, the application proposes a capturing method applicable to a terminal device defining at least one camera, the at least one camera including at least one lift-able camera, and the method including:
displaying a capturing interface;
receiving a capturing instruction; and
controlling a first camera to capture at least two images from different heights to obtain a captured photo, where the first camera is one of the at least one lift-able camera.

In a possible implementation, before the receiving the capturing instruction, the method further includes:
switching a capturing mode from a current capturing mode to the first capturing mode when selecting a selection instruction of the first capturing mode is detected.

In a possible implementation, the controlling the first camera to capture at least two images from different heights to obtain the captured photo includes:
controlling the first camera to capture a first image from a first height;
controlling the first camera to capture a second image from a second height,
wherein the first height and the second height are different heights in height information; and
performing fusion processing on the first image and the second image to obtain the captured photo.

In a possible implementation, the height information further includes orientation of the terminal device, and the method further includes:
obtaining the orientation of the terminal device, the orientation being in vertical orientation or horizontal orientation; and
when it is determined that orientation in the height information corresponding to two or more pieces of height information, displaying the two or more pieces of height information on the capturing interface;
when a selection operation for a first height information among the two or more pieces of height information is detected, determining the first height information to be the height information of the first capturing mode.

In a possible implementation, the capturing, by the first camera, at least two images from different heights to obtain the captured photo further includes:
when it is determined that the height information does not comprise two or more heights, moving the first camera to a third height, wherein the third height is a height of the camera set in the height information;
capturing images with different exposure parameters from the third height to obtain at least two images;
performing fusion processing on the at least two obtained images to obtain the captured photo.

In a possible implementation, after the moving the first camera to a third height, the method further includes:
In a second aspect, embodiments of the present application provide a capturing method applicable to a terminal device defining at least three cameras, the at least three cameras including at least two lift-able cameras, and the method including:
displaying a capturing interface;
receiving a capturing instruction; and
controlling a second camera to capture from a fixed height according to height information corresponding to a capturing mode, and a third camera to capture from different heights to obtain a panoramic image,
where the second camera and the third camera are lift-able cameras, and after the receiving the capturing instruction, the third camera is extended to a highest height, and then is
retracted therefrom towards the terminal, continuously capturing the panoramic image during the retraction; and
the panoramic image captured by the third camera is fused with an image captured by the second camera to obtain a fused panoramic image, where the fusing includes obtaining different image information from the panoramic image captured by the third camera and the image captured by the second camera and generating the fused panoramic image using the different image information, where the image captured by the second camera is used at a center position or a starting position or an ending position of the fused panoramic image.

In a possible implementation, when the image captured by the second camera is used at the center position of the fused panoramic image, the image captured by the second camera is used as a central axis of the fused panoramic image during the fusing process.

In a possible implementation, the controlling the second camera to capture from different heights and the third camera to capture from different heights to obtain the captured photo includes:
obtaining height information corresponding to a second capturing mode according to a corresponding relationship between capturing modes and height information;
obtaining first height information corresponding to the second camera and second height information corresponding to the third camera according to the second capturing mode;
determining whether the first height information and the second height information both include two or more heights.

In a possible implementation, when it is determined that the first height information and the second height information both comprise two or more heights, the second camera is controlled to capture a first image from a third height, the third camera is controlled to capture a second image from a fourth height;
the second camera is controlled to capture a third image from a fifth height, the third camera is controlled to capture a fourth image from a sixth height, wherein the third height and the fifth height are two different heights in the first height information, and the fourth height and the sixth height are two different heights in the second height information; and
the first image, the second image, the third image, and the fourth image are fused to obtain a captured photo.

In a third aspect, the embodiments of the present application provide a capturing method applicable to a terminal device defining at least two cameras, the at least two cameras including at least one lift-able camera, and the method including:
displaying a capturing interface;
receiving a capturing instruction; and
controlling the lift-able camera to extend to a highest height and then retract therefrom towards the terminal, continuously capturing a panoramic image during the retraction,
where the terminal device further includes a fixed camera in addition to the lift-able camera; and
when an automatic panoramic capturing instruction is received, the fixed camera is controlled to capture and output a fixed image, the lift-able camera outputs the panoramic image, and the fixed image and the panoramic image are fused to obtain a fused panoramic image, where the fusing includes obtaining different image information from the panoramic image captured by the lift-able camera and the fixed image captured by the fixed camera and generating the fused panoramic image using the different image information, where
the fixed image captured by the fixed camera is used at a center position or a starting position or an ending position of the fused panoramic image.

In a fourth aspect, embodiments of the present application provide a mobile terminal defining at least one lift-able camera that reciprocates along a first direction to capture from a first position and a second position along the first direction.

In a possible implementation, the lift-able camera extends beyond a casing of the mobile terminal along a first direction to capture from a first position and a second position that are beyond the casing and along the first direction, respectively, to obtain a captured photo.

In a possible implementation, when the lift-able camera is located at anywhere beyond the casing and a pushing operation is received by the at least one lift-able camera, the at least one lift-able camera is retracted into the casing of the mobile terminal.

In a possible implementation, when one of the at least one lift-able camera receives a dragging operation by a user, the dragged camera is moved to the position of the dragging operation.

In a fifth non-claimed aspect, embodiments of the present application provide a capturing apparatus, including:
a displaying unit, configured to display a capturing interface;
a receiving unit, configured to receive a capturing instruction;
a controlling unit, configured to control a first camera to capture at least two images from different heights, where the first camera is a lift-able camera;
a processing unit, configured to perform fusion processing on the at least two images to obtain a captured photo;
an outputting unit, configured to output the captured photo.

In a possible implementation, the apparatus further includes:
a switching unit, configured to switch a capturing mode from a current capturing mode to a first capturing mode when a selection instruction for selecting the first capturing mode is detected, wherein the first capturing mode is any capturing mode other than the current capturing mode.

In a possible implementation, the controlling unit is specifically configured to:
control the first camera to capture a first image from a first height;
control the first camera to capture a second image from a second height, where the first height and the second height are two different heights in the height information; and
perform fusion processing on the first image and the second image to obtain a captured photo.

In a possible implementation, the height information further includes orientation of the terminal device, and the apparatus further includes:
a first obtaining unit, configured to obtain the orientation of the terminal device, where the orientation is vertical orientation or horizontal orientation; and
a first outputting unit, configured to promote information for prompting to adjust the orientation of the terminal device when it is determined that the orientation in the height information corresponding to the first capturing mode is different from the obtained orientation.

In a possible implementation, the apparatus further includes:
a second obtaining unit, configured to obtain the height information corresponding to the first capturing mode according to the corresponding relationship between capturing modes and height information; and
a first determining unit, configured to determine whether the height information includes two or more heights.

In a possible implementation, the apparatus further includes:
a second determining unit, configured to determine whether the first capturing mode corresponds to two or more pieces of height information;
a second displaying unit, configured to display the two or more height information on the capturing interface when it is determined that the first capturing mode corresponds to two or more height information; and
a determining unit, configured to determine the first height information to be the height information of the first capturing mode when a selection operation of the first height information in the two or more height information are detected.

In a possible implementation, the controlling unit is further configured to:
move the first camera to a third height when it is determined that the height information does not include two or more heights, where the third height is a height of the camera set in the height information;
capture images with different exposure parameters from the third height to obtain at least two images; and
fuse the obtained at least two images to obtain a captured photo.

In a possible implementation, the apparatus further includes:
a third displaying unit, configured to display an adjustable range when an adjustment instruction for adjusting the height of the first camera is detected; and
an adjusting unit, configured to adjust the first camera to the height corresponding to the operation when the adjustment instruction is detected.

In a possible implementation, the apparatus further includes:
a second outputting unit, configured to promote information for prompting whether to confirm the operation on the adjustable range; and
a detecting unit, configured to detect the confirmation to the information input for the operation on the adjustable range for.

In a possible implementation, the apparatus further includes:
a fourth displaying unit, configured to display an adjustable range when an adjustment instruction for adjusting the height of the first camera is detected; and
a fifth displaying unit, configured to display the height of the dragged height of the first camera in the adjustable range when the dragging on the first camera is detected.

In a possible implementation, the apparatus further includes:
a third outputting unit, configured to promote information for prompting that the terminal device shall not be moved during the capturing of the first camera.

In a possible implementation, the first capturing mode is a blur capturing mode, and from the first image and the second image, principal object information and depth information in the image are obtained, and the first image and the second image are fused to synthesize a blurred photo.

In a sixth non-claimed aspect, embodiments of the present application provide a capturing apparatus, including:
a displaying unit, configured to display a capturing interface;
a receiving unit, configured to receive a capturing instruction; and
a controlling unit, configured to control a second camera to capture from different heights and a third camera to capture from different heights to obtain a captured photo, where at least one of the second camera and the third camera is a lift-able camera.

In a possible implementation, the apparatus further includes:
a photographing unit, configured to extend the third camera to the highest height and retract the same therefrom towards the terminal, while continuously capturing panoramic photos during the retraction; and
a fusion unit, configured to merge the panoramic images captured by the third camera with the image captured by the second camera, so as to realize a panoramic capturing function.

In a possible implementation, in the photo fusion process, the image captured by the second camera serves as a central axis of the panoramic image.

In a possible implementation, the controlling unit is specifically configured to:
obtain height information corresponding to the second capturing mode according to a corresponding relationship between capturing modes and height information;
obtain first height information corresponding to the second camera and second height information corresponding to the third camera according to the second capturing mode; and
determine whether the first height information and the second height information both include two or more heights.

In a possible implementation, the controlling unit is further configured to:
control the second camera to capture a first image from a third height, and control the third camera to capture a second image from a fourth height when it is determined that both the first height information and the second height information include two or more heights;
control the second camera to capture a third image from a fifth height, and control the third camera to capture a fourth image from a sixth height, where the third height and the fifth height are two different heights in the first height information, and the fourth height and the sixth height are two different heights in the second height information; and
perform fusion processing on the first image, the second image, the third image, and the fourth image to obtain a captured photo.

In a seventh non-claimed aspect, the present application provides a capturing apparatus, including:
a displaying unit, configured to display a capturing interface;
a receiving unit, configured to receive an capturing instruction; and
a controlling unit, configured to control the lift-able camera to extend to the highest height and then retract therefrom towards the terminal, continuously capturing panoramic photos during the retraction.

In a possible implementation, the terminal device also includes: a fixed camera in addition to the lift-able camera;
a controlling unit, configured to control the fixed camera to capture an image and output a fixed image when receiving an automatic panoramic capturing instruction; and control the lift-able camera to output a panoramic image, and fuse the fixed image with the panoramic image to obtain a panoramic image.

In another non-claimed aspect, embodiments of the present application provide a processor, a memory, an input device, an output device, and a camera that are mutually connected, wherein the memory is configured to store a computer program that comprises program instructions, and the processor is configured to call the program instructions to execute the capturing method according to any one of the first aspect and/or the possible implementations thereof.

In an eighth non-claimed aspect, embodiments of the present application provide a processor a memory, an input device, an output device, and a camera that are mutually connected, wherein the memory is configured to store a computer program that supports the capturing apparatus to execute the capturing method, the computer program comprises program instructions, and the processor is configured to call the program instructions to execute the capturing method according to any one of the second aspect and/or the possible implementations thereof.

In a ninth non-claimed aspect, embodiments of the present application provide a processor, a memory, an input device, an output device, and a camera that are mutually connected, wherein the memory is configured to store a computer program that supports the capturing apparatus to execute the capturing method, the computer program comprises program instructions, and the processor is configured to call the program instructions to execute the capturing method according to any one of the third aspect and/or the possible implementations thereof.

In a tenth non-claimed aspect, embodiments of the present application provide a processor, a memory, an input device, an output device, and a camera that are mutually connected, wherein the memory is configured to store a computer program that supports the capturing apparatus to execute the capturing method, the computer program comprises program instructions, and the processor is configured to call the program instructions to execute the capturing method according to any one of the fourth aspect and/or the possible implementations thereof.

In the embodiment of the present application, a terminal device defining at least one camera including at least one lift-able camera is used. By displaying the capturing interface and receiving a capturing instruction input by a user, the lift-able camera is enabled to capture multiple images from different heights. The terminal device processes the multiple images obtained to derive the processed result as the final photo, and outputs the same. By manipulating a lift-able camera rather than providing multiple cameras, not only can the number of hardware interfaces occupied be reduced to simplify the circuit structure of the terminal device, but also can the software calibration time be reduced, thereby improving the capturing efficiency.

### Brief description of drawings

In order to more clearly describe the technical solutions in the embodiments of the present application, the drawings needed in the embodiments will be briefly introduced hereinafter. Obviously, the drawings in the following description are only some embodiments of the application. For those of ordinary skill in the art, other drawings can be derived based on these drawings without paying creative work.
FIG. 1 is a schematic flowchart of a capturing method provided by an embodiment of the present application;
FIG. 2 is a schematic flowchart of another capturing method provided by an embodiment of the present application;
FIG. 3 is a schematic flowchart of another capturing method provided by an embodiment of the present application;
FIG. 4 is a schematic structural diagram of a capturing apparatus provided by an embodiment of the present application;
FIG. 5 is a schematic structural diagram of another capturing apparatus provided by an embodiment of the present application;
FIG. 6 is a schematic structural diagram of still another capturing apparatus provided by an embodiment of the present application;
FIG. 7 is a schematic structural diagram of a terminal device provided by an embodiment of the present application;
FIG. 8 is a schematic structural diagram of another terminal device provided by an embodiment of the present application;
FIG. 9 is a schematic structural diagram of still another terminal device provided by an embodiment of the present application.

### Description of embodiments

The technical solutions in the embodiments of the present application will be clearly and completely described below in conjunction with the drawings accompanying the embodiments of the present application.

It should be understood that, as used in this specification and the appended claims, the terms "include" and "comprise" indicate the presence of the described features, entities, steps, operations, elements and/or components without excluding the presence or inclusion of at least one of other features, entities, steps, operations, elements, components and/or collections thereof.

It should also be understood that the terms used in the specification of the application are only for the purpose of describing specific embodiments and are not intended to limit the application. As used in the specification of the application and the appended claims, unless the context clearly indicates otherwise, the singular forms "a", "an" and "the" are intended to include plural forms.

It should be further understood that the term "and/or" used in the specification and appended claims of the application refers to any and all possible combination of at least one of the associated items listed, and includes these combinations themselves.

As used in this specification and the appended claims, the term "if" can be interpreted as "when" or "once" or "in response to determining" or "in response to detecting" depending on the context. Similarly, the phrase "if it is determined" or "if [a described condition or event] is detected" can be interpreted as meaning "once determined" or "in response to determining" or "once [a described condition or event] is detected" or "in response to detection of [a described condition or event]".

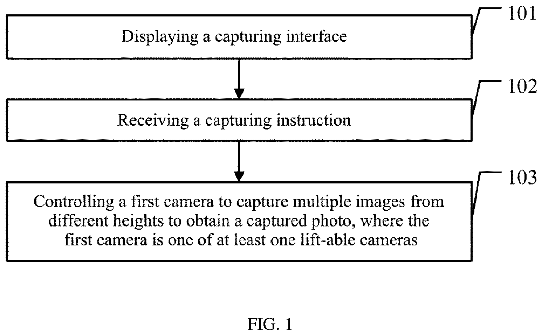

Please refer to FIG. 1, which is a schematic flowchart of a capturing method provided by an embodiment of the present application. The method is applied to a terminal device defining at least one camera, among which at least one lift-able camera are presented. As shown in FIG. 1, the capturing method may include the following.

### 101. Displaying a capturing interface.

In a possible implementation, a terminal device in an embodiment of the application may include a mobile phone, a tablet computer, a personal digital assistant (PDA), a mobile Internet device (MID), and a smart wearable device (such as smart watches, smart bracelets) and other electronic devices that embeds multiple cameras.

The terminal device can be provided with at least one camera, with a lift-able camera provided on one side. When not in use, the lift-able camera resides at a default position where the lift-able camera stays when no capturing software is started. This can be the lowest position reachable by the lift-able camera.

When the terminal device displays the capturing interface, e.g., after entering camera software, the camera is moved to a starting position, that is, the starting position is different from the default position, and the camera is ready to capture when at the starting position. The position is the lowest point in the lift-able range of the camera during capturing. The capturing interface of the terminal device can displayed a capturing button, at least one capturing modes, at least one exposure parameter modes, a flash on button, etc., which will not be limited herein. Specifically, the capturing modes may include a blur capturing mode, a 3-dimensional (3D) capturing mode, a landscape capturing mode, a portrait capturing mode, a night mode, and so on. When a capturing instruction by the user is received, the capturing will be performed in a current capturing mode of the camera if the user did not adjust the capturing mode.

When a selection instruction input by the user for selecting a first capturing mode is detected, the capturing mode is switched from the current capturing mode to the first capturing mode, which can be any capturing mode other than the current capturing mode selected by the user.

### 102. Receiving a capturing instruction.

In a possible implementation, receiving the capturing instruction by the user may be referring to: clicking the capturing button in the capturing interface to capture; capturing immediately when a specific facial expression or move of a person is detected in the capturing interface; capturing by a timer, i.e., the user presets a time at which the camera is to be automatically turn on for capturing; and a capturing instruction by the user's voice, etc.. There is no limitation to the way of inputting the capturing instruction.

103. Controlling a first camera to capture multiple images from different heights, where the first camera is one of the at least one lift-able camera.

In a possible implementation, a capturing apparatus controls the lift-able camera to capture multiple images from different heights. Specifically, after the user selects the capturing mode, the terminal device can obtain the height information for the camera to a captured photo according to the capturing mode, which may include one height or multiple heights. If the mode corresponds to multiple heights, the camera is moved from the starting position to the multiple height positions to capture multiple images therefrom. If only one height is included in the height information, the camera is moved to the height in the height information to capture multiple images to obtain the final image.

One capturing mode can correspond to multiple pieces of height information. When the user selects a current capturing mode, the height information for the camera is obtained. The height information can include the orientation information of the terminal device. The orientation information refers to whether the terminal device is capturing horizontally or vertically.

When it is determined that the current capturing mode corresponds to multiple pieces of height information, the multiple pieces of height information is displayed on the capturing interface. An animation about the camera taking the photo or a preview of the capturing effect can also be displayed, which will not be limited herein. After displaying the multiple pieces of height information, the user is prompted to select a piece of height information from the multiple pieces of height information as the height information corresponding to the current capturing mode.

After the height information is determined, the current orientation of the terminal device is obtained. A gravity sensor can obtain the orientation of the terminal device, as well as whether the terminal device is currently in a vertical or horizontal orientation, that is, a landscape screen state or portrait screen state. When it is determined that the required orientation in the height information corresponding to the current capturing mode is inconsistent with the obtained orientation, information is outputted for prompting the user to adjust the orientation of the terminal device.

After a certain interval, the orientation of the terminal device is re-obtained. If the orientation of the terminal device re-obtained is consistent with the orientation in the height information corresponding to the current capturing mode, no information is displayed on the display interface. Instead, the device will wait for the user's capturing instruction.

Optionally, after a certain interval, the orientation of the terminal device is re-obtained, and if the orientation re-detected is inconsistent with the orientation in the height information, the information output continues. If the detected orientation of the terminal device is inconsistent with the orientation in the height information corresponding to the current capturing mode for a preset time range, it is determined that no one is currently operating the terminal device, and the camera and display screen of the terminal device can be put to sleep for now.

In the process of capturing, if the height information corresponding to the current capturing mode contains multiple heights, the camera will inevitably need some time to move from the starting position to the multiple heights in the height information. In order to achieve a more desirable capturing effect, the terminal device needs to remain stationary while the camera is moving and capturing. Therefore, during the capturing process of the camera, movement information is outputted to remind the user not to move the terminal device. The output can be done in the form of texts in the display interface, or in the form of a voice, or in the form of a blinking flash light reminding the user. The way of outputting the information is not limited herein.

In a possible implementation, after the multiple images are obtained, they need to be fused to form one photo as the final photo. The fusion processing of multiple images is divided into two categories. One is the fusion processing performed on multiple images captured by a camera from the same position with different exposure parameters. The other is the fusion processing performed on multiple images captured by a camera from different positions. The camera can capture multiple images from different heights and fuse them in two steps. The first step is to fuse them to obtain one image for each height. The second step is to further fuse images of different heights. The final result of processing the multiple images is deriving one image as the final photo.

Specifically, the multiple images captured by a camera from the same position with different exposure parameters may be two images captured with a low exposure parameter and a high exposure parameter, respectively. When fusing the two images, the fusion can be done by taking the principal object from the one with low exposure and the background from the one with higher exposure. Alternatively, the fusion can also be done by taking the background from the one with low exposure and the principal object from the one with higher exposure. There is no restriction herein.

In a possible implementation, when the camera captures the multiple images from the same position, the camera may perform the capturing by being moved to the height corresponding to the capturing mode for capturing after receiving a capturing instruction, or the camera may firstly be moved to the height corresponding to a current capturing mode, and then perform the capturing when a capturing instruction input by the user is received.

Specifically, when the user thinks the camera cannot obtain the desired capturing effect at its preset position and needs to move the camera to somewhere other than the preset capturing height, an adjustment instruction can be manually input. Thus, the terminal device displays an adjustable range, which means the maximum range that the camera can be adjusted. The adjustable range can be several fixed heights or a height range adjustment that can be slid-ably operated, which will not be limited herein. When a user operation directed to the adjustable range is detected, the camera will be adjusted to the height corresponding to the user operation. Before adjusting the height of the camera, when the user selects the height to be adjusted to, a prompt message can be output to the user to prompt the user to confirm whether operate the adjustable range. For example, an output "Adjust the camera to H1 position" can be shown to the user. When the user's input to confirmation the information is detected, the camera is adjusted to the height selected by the user.

The adjusting the height of the camera can be done by selecting the height that the user needs to adjust to from the adjustable range displayed on the display screen, or it can be done by a manual drag operation to the camera. That is, when an adjustment instruction input by the user is detected, the adjustable range is displayed. When a drag operation on the camera is detected, the height of camera is obtained and displayed in the adjustable range of the current interface.

Specifically, for the multiple images captured by the camera from multiple locations, two photos with different exposure parameters can be initially taken at each location. The two images are combined to obtain one image for each height, and different image information is obtained from the images from different heights as needed, and then fused to obtain the final photo.

Optionally, when performing fusion processing on the images, the saturation, brightness, hue and other parameters of the images can be processed, which will not be limited herein.

In a possible implementation, the processed photos are stored and output to the display screen. The terminal device stores the final processing result, and the multiple images can be deleted to release the memory for the terminal device.

For example, when the current capturing mode of the terminal device is normal capturing mode and a selection instruction input by the user for selecting a first capturing mode, namely blur capturing mode, is detected, the normal capturing mode is switched to the blur capturing mode. The terminal device obtains the height information corresponding to the blur capturing mode according to the corresponding relationship between capturing modes and height information. That is, the camera needs to capture multiple images from the heights H1 and H2, respectively, to obtain the principal object information and depth information from the images, so as to be able to synthesize a blurred photo similar to that taken by a single-lens reflex (SLR) camera with a large aperture. When a selection instruction input by the user for selecting a second capturing mode, namely 3D capturing mode, is detected, the normal capturing mode is switched to the 3D capturing mode, and the terminal device obtains the height information corresponding to the 3D capturing mode according to the corresponding relationship between capturing modes and height information. It is understandable that when multiple images are obtained separately, the fusion processing on the blurred images and the fusion processing on the three-dimensional images are performed separately to obtain the blurred image and the three-dimensional image.

Optionally, information for prompting the user about the current capturing mode of the terminal device may be output on the capturing interface.

In a possible implementation, the height information can be height information corresponding to the capturing modes and be stored in the factory settings of the terminal device. For example, research and development discover that the camera of the terminal device has a better performance of capturing portraits from position H3 during. The camera has a better performance of capturing landscape from position H4. Therefore, the height information of H3 is associated to the portrait capturing mode, and the height information of H4 is associated to the landscape capturing mode. It is understandable that the above is only an example, and the actual capturing modes include the above but are not limited thereto. The terminal device determines whether the height information includes multiple heights, and in the case of determining that the height information includes multiple heights, controls the camera to take a first image from a first height, and a second image from a second height, where the first height and the second height are two different heights in the height information. The first image and the second image are determined to be the multiple images captured. After being obtained, the multiple images are fused to obtain the photo for the current capturing mode.

In a possible implementation, the cameras take multiple images at different heights. According to a sequence, the camera is first moved to a first height in height information to take an image. The first height is different from a default position and start position of the camera, and is the first capturing height in a preset capturing process. The sequence of movement may be from high to low, or from low to high, which will not be limited herein.

In the above process of camera capturing, information is output to remind the user not to move the terminal device, and the output mode is not limited herein.

Optionally, during the capturing process, a reference line may be displayed in the capturing interface of the terminal device to prompt the user to determine whether the terminal device is moved.

In a possible implementation, after capturing from the first height, move the camera to a second height, where the first height and the second height are two different heights. After the camera is moved to the second height to capture the image, more images can be captured from a third height and a fourth height, which will not be limited herein.

In the embodiment of the present application, a terminal device defining at least one camera including at least one lift-able camera is used. By displaying a capturing interface and receiving a capturing instruction input by a user, the lift-able camera is enabled to capture multiple images from different heights. The terminal device processes the multiple images obtained to derive the processed result as the final photo, and outputs the same. By manipulating a lift-able camera rather than providing multiple cameras, not only can the number of hardware interfaces occupied be reduced to simplify the circuit structure of the terminal device, but also can the software calibration time be reduced, thereby improving the capturing efficiency.

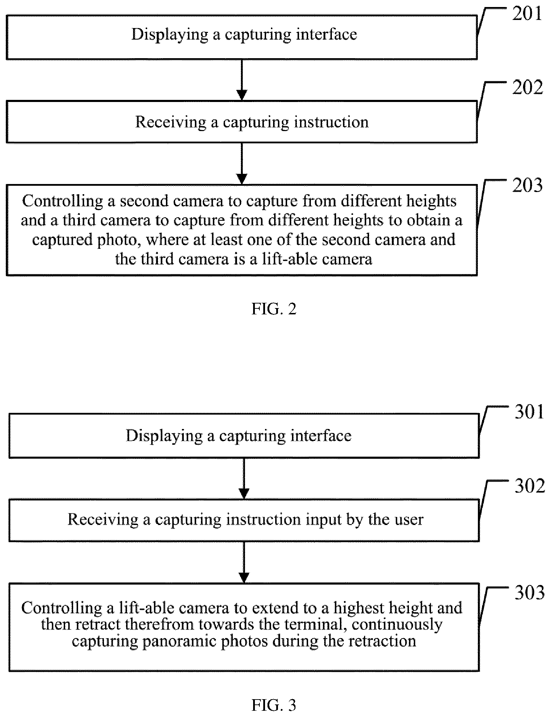

Refer to FIG. 2, which is a schematic flowchart of another capturing method provided by an embodiment of the present application. The method is applied to a terminal device defining two or more cameras, among which at least one lift-able camera are included. As shown in FIG. 2, the capturing method may include the following.

### 201. Displaying a capturing interface.

### 202. Receiving, a capturing instruction.

For the specific implementation process of step 201 to step 202, reference can be made to the description of step 101 to step 102 in the embodiment corresponding to FIG. 1, and the details will not be repeated herein.

203. Controlling a second camera to capture from different heights, and a third camera to capture from different heights to obtain the final photo, where at least one of the second camera and the third camera is a lift-able camera.

In a possible implementation, the lift-able cameras may include at least one lift-able camera. When at least one camera is included, height information corresponding to a current capturing mode is obtained, with one camera corresponding to one piece of height information. One capturing mode can also correspond to multiple pieces of height information. Having selected the capturing mode, the user can move on to select the height information of the camera. It is understandable that each camera corresponds to one piece of height information.

Now, an example with two lift-able cameras, i.e., a second camera and a third camera, will be illustrated. A determination about whether height information corresponding respectively to the two cameras contains multiple heights. When it is determined that they both include multiple heights, the two cameras are controlled respectively to capture from the heights in the height information. That is, the second camera and the third camera are used to capture according to their corresponding height information to separately obtain multiple images. If the height information of each camera includes two heights, four images are obtained and fused to obtain a photo as the output. Here, the number of lift-able cameras is not limited, nor is the number of heights in the height information limited, where the height information corresponding to the second camera may either be the same as or different from the height information corresponding to the third camera, which will not be limited herein.

In a possible implementation including two cameras by way of example, if the second camera and the third camera include a lift-able camera, and the other camera is a fixed camera, the height information of the two cameras in the current capturing mode is obtained, respectively, where the height information of the fixed camera is a fixed height that can either take images with different exposure parameters. Or, it can take one image to be fused with images captured by the other lift-able camera at different heights to obtain the final photo.

In an example where the second camera is a fixed camera and the third camera is a lift-able camera, when the current capturing mode is panoramic capturing mode, after a capturing instruction input by the user is received, the third camera can be extended to the highest height and then be retracted therefrom towards the terminal, continuously capturing panoramic photos during the retraction. Meanwhile, the second camera takes a photo from a fixed position. It should be noted that when multiple images are obtained, the panoramic images captured by the third camera are fused with the image captured by the second camera to realize the panoramic capturing function. The terminal device may be oriented vertically or horizontally to perform the capturing. In the fusion process, the image taken by the second camera (i.e. the fixed camera) can be used as the center position for the panoramic images for fusion, or the image taken by the second camera can be used as the starting or ending position image for fusion to get the final panoramic image.

In embodiments of present application, a terminal device defining at least one camera including at least one lift-able camera is used. By receiving the capturing instruction input by the user, the at least one lift-able camera can separately capture multiple images, which are then be fused to obtain the captured photo. Since depth information can be obtained from the multiple images, an improved capturing effect can be obtained.

In embodiments of the present application, a terminal device defining at least one camera including at least one lift-able camera is used. By displaying the capturing interface to receive a capturing instruction input by the user, the lift-able camera is enabled to capture multiple images from different heights. The terminal device processes the multiple images obtained to derive the processed result as the final photo, and outputs the same. By manipulating a lift-able camera rather than providing multiple cameras, not only can the number of hardware interfaces consumed be reduced to simplify the circuit structure of the terminal device, but also can the software calibration time be reduced, thereby improving the capturing efficiency.

Refer to FIG. 3, which is a schematic flowchart of still another capturing method proposed by the application. The method is applied to a terminal device defining at least one camera, among which at least one lift-able camera are included. As shown in FIG. 3, the capturing method may include the following.

### 301. Displaying a capturing interface.

### 302. Receiving, a capturing instruction.

For the specific implementation process of step 301 to step 302, reference can be made to the description of step 101 to step 102 in the embodiment corresponding to FIG. 1, and the details will not be repeated herein.

303. Controlling a lift-able camera to extend to the highest height and then retract therefrom towards the terminal, continuously capturing panoramic photos during the retraction.

In a possible implementation, if the capturing mode is set to panoramic mode during the capturing process, after a capturing instruction input by the user is received, the lift-able camera can be extended to the highest height and then be retracted therefrom towards the terminal, continuously capturing photos during the retraction. Alternatively, after a capturing instruction input by the user is received, the lift-able camera can be continuously lifted from the lowest height towards the highest height, continuously capturing photos along the way. Or, the user may select a starting height and an ending height, such that after a capturing instruction is received, the camera is moved from the starting height to the ending height selected by the user, while continuously capturing photos along the way.

In the panoramic mode, only one camera, that is, the lift-able camera, can be controlled. Alternatively, two cameras can be controlled, with the second camera being a fixed camera. When a capturing instruction input by the user is received, the lift-able camera shifts and captures, the fixed camera captures a fixed image, and the fixed image is fused with the photos taken by the lift-able camera to obtain a panoramic image.

In the embodiment of the present application, a terminal device defining at least one camera including at least one lift-able camera is used. By receiving the capturing instruction input by the user, the at least one lift-able camera can separately capture multiple images, which are then fused to obtain the captured photo. Since depth information can be obtained from the multiple images, an improved capturing effect can be obtained. By manipulating a lift-able camera rather than providing multiple cameras, not only can the number of hardware interfaces occupied be reduced to simplify the circuit structure of the terminal device, but also can the software calibration time be reduced, thereby improving the capturing efficiency.

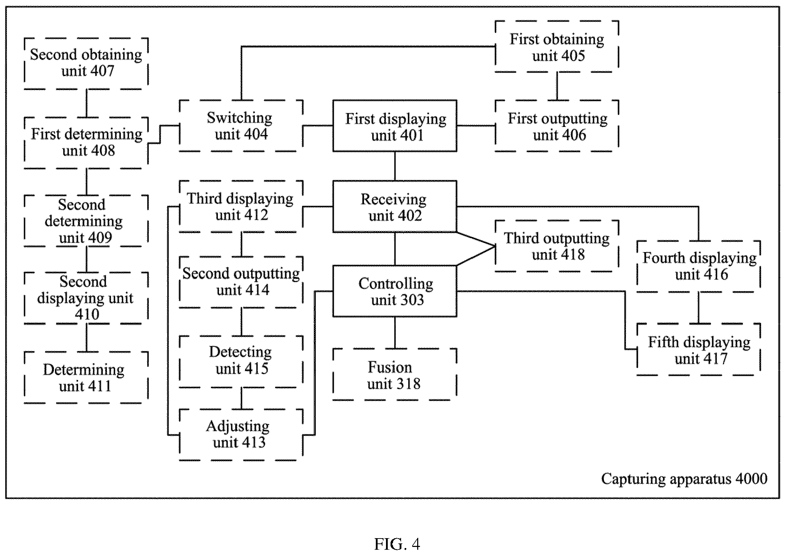

Please refer to FIG. 4, which is a schematic structural diagram of a capturing apparatus proposed by the present application. As shown in FIG. 4, the capturing apparatus 4000 may include:
a first displaying unit 401, configured to display a capturing interface;
a receiving unit 402, configured to receive a capturing instruction;
a controlling unit 403, configured to control a first camera to capture at least two images from different heights to obtain a captured photo, where the first camera is one of the at least one lift-able camera.

In a possible implementation, the apparatus 4000 further includes:
a switching unit 404, configured to switch a capturing mode from a current capturing mode to a first capturing mode when a selection instruction for selecting the first capturing mode is detected.

In a possible implementation, the controlling unit 403 is specifically configured to:
control the first camera to capture a first image from a first height;
control the first camera to capture a second image from a second height, where the first height and the second height are two different heights in height information; and
perform fusion processing on the first image and the second image to obtain the captured photo.

In a possible implementation, the height information further includes orientation of the terminal device, and the apparatus 4000 further includes:
a first obtaining unit 405, configured to obtain the orientation of the terminal device, where the orientation is vertical orientation or horizontal orientation; and
a first outputting unit 406, configured to promote information to prompt adjustment of the orientation of the terminal device when it is determined that the orientation in the height information corresponding to the first capturing mode is different from an obtained orientation.

In a possible implementation, the apparatus 4000 further includes:
a second obtaining unit 407, configured to obtain the height information corresponding to the first capturing mode according to the corresponding relationship between capturing modes and height information; and
a first determining unit 408, configured to determine whether the height information includes two or more heights.

In a possible implementation, the apparatus 4000 further includes:
a second determining unit 409, configured to determine whether the first capturing mode corresponds to two or more pieces of height information;
a second displaying unit 410, configured to display the two or more pieces of height information on the capturing interface when it is determined that the first capturing mode corresponds to two or more pieces of height information; and
a determining unit 411, configured to determine the first height information to be the height information of the first capturing mode when a selection operation directed to the first height information in the two or more height information is detected.

In a possible implementation, the controlling unit 403 is further configured to:
move the first camera to a third height when it is determined that the height information does not include two or more heights, where the third height is a height of the camera preset in the height information;
capture at least two images with different exposure parameters from the third height; and
fuse the at least two images to obtain a captured photo.

In a possible implementation, the apparatus 4000 further includes:
a third displaying unit 412, configured to display an adjustable range when an adjustment instruction for adjusting the height of the first camera is detected; and
an adjusting unit 413, configured to, when an operation on the adjustable range is detected, adjust the first camera to a height corresponding to the operation.

In a possible implementation, the apparatus 4000 further includes:
a second outputting unit 414, configured to promote information for prompting whether to confirm the operation to the adjustable range; and
a detecting unit 415, configured to detect the operation to the adjustable range for the confirmation of the information input.

In a possible implementation, the apparatus 4000 further includes:
a fourth displaying unit 416, configured to display the adjustable range when an adjustment instruction for adjusting the height of the first camera is detected; and
a fifth displaying unit 417, configured to display the height of the first camera being dragged to within the adjustable range when a dragging on the first camera is detected.

In a possible implementation, the apparatus 4000 further includes:
a third outputting unit 418, configured to promote information for prompting that the terminal device shall not be moved during the capturing of the first camera.

In a possible implementation, the first capturing mode is a blur capturing mode, the first image and the second image provide principal object information and depth information, respectively, and the first image and the second image are fused to synthesize a blurred photo.

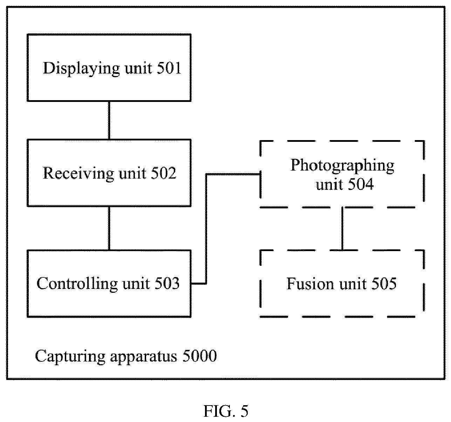

Please refer to FIG. 5, which is a schematic structural diagram of a capturing apparatus proposed by the present application. As shown in FIG. 5, the capturing apparatus 5000 may include:
a displaying unit 501, configured to display a capturing interface;
a receiving unit 502, configured to receive a capturing instruction input by the user; and
a controlling unit 503, configured to control the second camera to capture at different heights and the third camera to capture at different heights to obtain the captured photo. At least one of the second camera and the third camera is a lift-able camera.

In a possible implementation, the apparatus 5000 further includes:
a photographing unit 504, configured to extend the third camera to the highest height and shrink from the highest height to the terminal orientation, and simultaneously uninterrupted panoramic photographs during the shrinking process; and
a fusion unit 505, configured to fuse the panoramic images captured by the third camera with the image captured by the second camera, so as to realize a panoramic capturing function.

In a possible implementation, in the photo fusion process, the image taken by the second camera is taken as the central axis of the panoramic image.

In a possible implementation, the controlling unit 503 is specifically configured to:
obtain the height information corresponding to the second capturing mode according to the corresponding relationship between capturing modes and height information;
obtain first height information corresponding to the second camera and second height information corresponding to the third camera according to the second capturing mode; and
determine whether the first height information and the second height information both include two or more heights.

In a possible implementation, the controlling unit 503 is further configured to:
control the second camera to capture a first image from a third height, and controlling the third camera to capture a second image from a fourth height when it is determined that both the first height information and the second height information include two or more heights.
control the second camera to capture a third image from a fifth height, and controlling the third camera to capture a fourth image from a sixth height, the third height and the fifth height are two different heights in the first height information, and the fourth height and the sixth height are two different heights in the second height information; and
perform fusion processing on the first image, the second image, the third image, and the fourth image to obtain a captured photo.

The apparatus in embodiments of present application, a terminal device defining at least one camera including at least one lift-able camera is used. By receiving the capturing instruction input by the user, the at least one lift-able camera can separately capture multiple images, which are then fused to obtain the captured photo. Since depth information can be obtained from the multiple images, an improved capturing effect can be obtained.

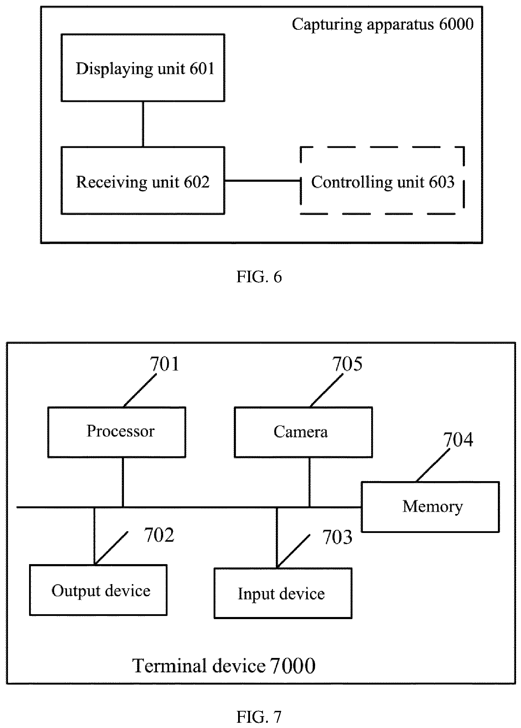

Please refer to FIG. 6, which is a schematic structural diagram of still another capturing apparatus proposed by the present application. As shown in FIG. 6, the capturing apparatus 6000 may include:
a displaying unit 601, configured to display a capturing interface;
a receiving unit 602, configured to receive a capturing instruction input by a user; and
a controlling unit 603, configured to control a lift-able camera to extend to the highest height and then retract therefrom towards the terminal, continuously capturing panoramic photos during the retraction.

In a possible implementation, the terminal device includes a fixed camera in addition to the lift-able camera.

The controlling unit 603 is configured to control the fixed camera to capture an image and output a fixed image when receiving an automatic panoramic capturing instruction; control the lift-able camera to output a panoramic image; and fuse the fixed image and the panoramic images to obtain a panoramic photo.

Please refer to FIG. 7, which is a schematic structural diagram of a terminal device proposed by the present application. As shown in FIG. 7, the terminal device 7000 may include:
at least one processors 701, an input device 702, an output device 703, a memory 704, and a camera 705, which are mutually connected via a bus. The input device 702 and the output device 703 are configured to receive and send data. The memory 704 is configured to store a computer program that includes program instructions, and the processor 701 is configured to execute the program instructions stored in the memory 704, where the processor 701 is configured to call the program instructions to perform the following:.
the processor 701 controls the output device 703 to display a capturing interface;
the processor 701 controls the input device 702 to receive a capturing instruction; and
the processor 701 controls the camera 705 to capture multiple images at different heights to obtain a captured photo, where the first camera is one of the at least one lift-able camera.

In a possible implementation, before the processor 701 controls the input device 702 to receive the capturing instruction input by the user, the processor 701 is further called to perform the following:
when a selection instruction input by the user for selecting the first capturing mode is detected, switching the capturing mode from the current capturing mode to the first capturing mode.

In a possible implementation, the processor 701 controls the camera 705 to capture multiple images from different heights to obtain the captured photo includes:
controlling the first camera to capture a first image from a first height;
controlling the first camera to capture a second image from a second height, where the first height and the second height are two different heights in the height information; and
performing fusion processing on the first image and the second image to obtain the captured photo.

In a possible implementation, the height information further includes the orientation of the terminal device, and the processor 701 is further called to perform the following:
obtaining the orientation of the terminal device, where the orientation is vertical orientation or horizontal orientation.

The processor 701 controls the output device 703 to promote information for prompting the user to adjust the orientation of the terminal device when it is determined that the orientation in the height information corresponding to the first capturing mode is different from the obtained orientation.

In a possible implementation, the processor 701 further includes the following steps before controlling the first camera to capture the first image from the first height:
obtaining the height information corresponding to the first capturing mode according to the corresponding relationship between capturing modes and height information; and determining whether the above height information includes multiple heights.

In a possible implementation, after the processor 701 obtains the height information corresponding to the first capturing mode according to the corresponding relationship between capturing modes and height information, the processor 701 is further called to perform the following steps:
determining whether the first capturing mode corresponds to two or more pieces of height information;
displaying the two or more pieces of height information on the capturing interface when it is determined that the first capturing mode corresponds to two or more pieces of height information.
determining the first height information to be the height information of the first capturing mode when a selection operation for the first height information in the two or more height information is detected.

In a possible implementation, the processor 701 controls the camera 705 to capture multiple images from different heights to obtain the captured photo, further includes:
moving the first camera to a third height, where the third height is the height of the camera set in the height information, when it is determined that the height information does not include two or more heights.
capturing images with different exposure parameters from the third height to obtain at least two images;
performing fusion processing on the obtained at least two images to obtain a captured photo.

In a possible implementation, after the processor 701 moves the camera 705 to the third height, it is further called to execute the following.

The processor 701 controls the output device 703 to display the adjustable range when it detects an adjustment instruction input by the user for adjusting the height of the first camera.

When a user operation on the adjustable range is detected, the processor 701 moves the camera 705 to adjust to the height corresponding to the user operation.

In a possible implementation, after the processor 701 controls the output device 703 to display the adjustable range, it is further called to perform the following.

The processor 701 controls the output device 703 to promote information for prompting the user whether to confirm the operation on the adjustable range; and
detects the confirmation input by the user in response to the information for confirming the operation on the adjustable range.

In a possible implementation, after the processor 701 moves the camera 705 to a third height, the method further includes the following.

The processor 701 controls the output device 703 to display the adjustable range when it detects an adjustment instruction input by the user for adjusting the height of the first camera.

The processor 701 controls the output device 703 to, when a dragging on the first camera is detected, display the height of the dragged height of the first camera within the adjustable range.

In a possible implementation, the processor 401 further controls the output device 403 to be called to perform the following:
outputting a prompt message for prompting the user that the terminal device shall not be moved during the capturing of the first camera.

In a possible implementation, the first capturing mode is a blur capturing mode. From the first image and the second image, principal object information and depth information in the image are obtained, respectively. The processor 701 performs fusion processing on the first image and the second image, thereby synthesizing a blurred photo.

It should be understood that, in some feasible implementations, the processor 701 may be a central processing unit (CPU), and the processor may also be other general-purpose processor or a digital signal processor (DSP), an application specific integrated circuit (ASIC), field programmable gate array (FPGA) or other programmable logic devices, discrete gates or transistor logic devices, discrete hardware components, etc.. The general-purpose processor may be a microprocessor, or the processor may also be any conventional processor or the like.

The memory 704 may include a read-only memory and a random access memory, and provides instructions and data to the processor 701. A part of the memory 704 may also include a non-volatile random access memory. For example, the memory 704 may also store device type information.

The input device 702 may include a touch screen, and the output device 703 may include a speaker and a screen with a display function. The camera 705 is a lift-able camera.

In a specific implementation, the terminal device can execute the implementations provided in various steps in FIG. 1 through built-in functional modules. For more details, reference may be made to the implementations provided in the foregoing steps, which will not be repeated herein.

In the terminal device in the embodiments of the present application, the capturing interface is displayed, the capturing instruction input by the user is received, and the lift-able camera is enabled to capture multiple images from different heights. The terminal device processes the multiple images obtained to derive the processed result as the final photo, and outputs the same. By manipulating a lift-able camera rather than providing multiple cameras, not only can the number of hardware interfaces occupied be reduced to simplify the circuit structure of the terminal device, but also can the software calibration time be reduced, thereby improving the capturing efficiency.

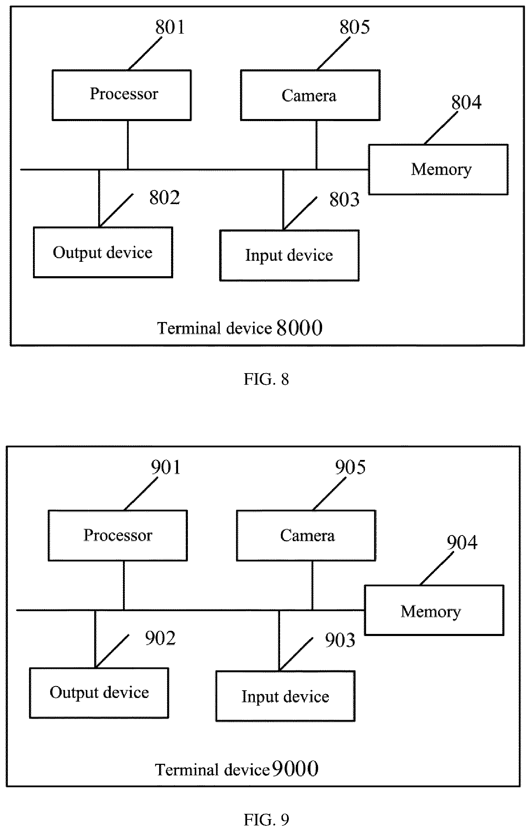

Please refer to FIG. 8, which is a schematic structural diagram of another terminal device proposed by the present application. As shown in FIG. 8, the terminal device 8000 may include:
at least one processors 801, input devices 802, output devices 803, memory 804, and cameras 805. The processor 801, the input device 802, the output device 803, the memory 804, and the camera 805 are connected via a bus. The input device 802 and the output device 803 are configured to receive and send data. The memory 804 is configured to store a computer program that includes program instructions, and the processor 801 is configured to execute the program instructions stored in the memory 804, where the processor 801 is configured to call the program instructions to perform the following.

The processor 801 controls the output device 803 to display a capturing interface.

The processor 801 controls the input device 802 to receive a capturing instruction input by the user.

A controlling unit 801 is configured to control the camera 805 to capture from different heights and the third camera to capture from different heights to obtain a captured photo, where at least one of the second camera and the third camera is a lift-able camera.

In a possible implementation, the second camera is a fixed camera, and the third camera is a lift-able camera. After the receiving the capturing instruction:
the processor 801 controls the third camera to extend to the highest height and retract therefrom towards the terminal, continuously capturing panoramic photos during the retraction.

The panoramic images captured by the third camera are fused with the image captured by the second camera to realize a panoramic photographing function.

In a possible implementation, in the photo fusion process, the processor 801 uses the image captured by the second camera as the central axis of the panoramic image.

In a possible implementation, the processor 801 controls the second camera to capture from different heights and controls the third camera to capture from different heights to obtain a captured photo, including:
obtaining the height information corresponding to the second capturing mode according to the corresponding relationship between capturing modes and height information; the second capturing mode is a capturing mode selected by the user;
obtaining first height information corresponding to the second camera and second height information corresponding to the third camera according to the second capturing mode; and
determining whether the first height information and the second height information both include two or more heights.

In a possible implementation, when it is determined that the first height information and the second height information both include multiple heights, the second camera is controlled to capture the first image from a third height, controlling the third camera to capture a second image from a fourth height;
the second camera is controlled to capture a third image from a fifth height, and the third camera is controlled to capture a fourth image from a sixth height, where the third height and the fifth height are two different heights in the first height information, and the fourth height and the sixth height are two different heights in the second height information; and
the first image, the second image, the third image, and the fourth image are fused to obtain the captured photo.

In the embodiments of the present application, a terminal device defining at least one camera including at least one lift-able camera is used. By receiving the capturing instruction input by the user, the at least one lift-able camera can separately capture multiple images, which are then fused to obtain the captured photo. Since depth information can be obtained from the multiple images, an improved capturing effect can be obtained.

Please refer to FIG. 9, which is a schematic structural diagram of still another terminal device proposed by the present application. As shown in FIG. 9, the terminal device 9000 may include:
at least one processors 901, an input device 902, an output device 903, a memory 904, and a camera 905. The processors 901, input device 902, output device 903, memory 904, and camera 905 are connected via a bus. The input device 902 and the output device 903 are configured to receive and send data. The memory 904 is configured to store a computer program that includes program instructions, and the processor 901 is configured to execute the program instructions stored in the memory 904, where the processor 901 is configured to call the program instructions to perform the following steps:
displaying a capturing interface;
controlling, by the processor 901, the input device 902 to receive a capturing instruction; and
controlling, by the processor 901, the lift-able camera to extend to the highest height and retract therefrom towards the terminal, continuously capturing panoramic photos during the retraction.

In a possible implementation, the terminal device includes a fixed camera in addition to the lift-able camera. The processor 901 controls the fixed camera to capture an image and output a fixed image when receiving an automatic panoramic capturing instruction. The lift-able camera outputs a panoramic image, and the fixed image and the panoramic image are fused to obtain a panoramic image.

The terminal device in the embodiment of the present application, a terminal device defining at least one camera including at least one lift-able camera is used. By receiving the capturing instruction input by the user, the at least one lift-able camera can separately capture multiple images, which are then fused to obtain the captured photo. Since depth information can be obtained from the multiple images, an improved capturing effect can be obtained.

A computer-readable storage medium may be an internal storage unit of the capturing apparatus, such as a hard disk or a memory of the capturing apparatus. The computer-readable storage medium may also be an external storage device of the capturing apparatus, such as a plug-in hard disk, a smart media card (SMC), a secure digital (SD) card, a flash card, etc.. The computer-readable storage medium may also include a magnetic disk, a compact disk, a read-only memory (ROM) or a random access memory (RAM), etc.. Further, the computer-readable storage medium may also include both an internal storage unit of the capturing apparatus and an external storage device. The computer-readable storage medium is used to store the computer program and other programs and data required by the capturing apparatus. The computer-readable storage medium can also be used to temporarily store data that has been output or will be output.

The terms "first" and "second" in the claims, specification and drawings of the application are used to distinguish different objects, rather than to describe a specific order. In addition, the terms "include" and "have" and any variations thereof are intended to cover non-exclusive inclusion. For example, a process, method, system, product, or device that "includes" a series of steps or units is not limited to the listed steps or units, but can also optionally include unlisted steps or units, or other steps or units inherent to the process, method, product or device. As used herein, a reference to "embodiment" means that a specific feature, structure or characteristic described in conjunction with the embodiment may be included in at least one embodiment of the present application. The presences of the phrase in various locations in the specification are not necessarily referring to the same embodiment, nor are they independent or alternative embodiments mutually exclusive with other embodiments. Those skilled in the art clearly and implicitly understand that the embodiments described herein can be combined with other embodiments. The term "and/or" used in the description of the application and the appended claims refers to any combination of one or more of the associated listed items and all possible combinations, and includes these combinations.

A person of ordinary skill in the art can realize that the units and algorithm steps of the examples described in the embodiments disclosed herein can be implemented by electronic hardware, computer software or a combination of the two. In order to clearly illustrate the interchangeability of hardware and software, the composition and steps of each example have been generally described in accordance with the function in the above description. Those skilled in the art can use various methods in individual specific applications to implement the described functions, but such implementation should not be considered beyond the scope of the application as long as they fall within the scope of the appended claims.

The above-disclosed are only the preferred embodiments of the application, which of course cannot be used to limit the scope of rights of the application. Therefore, equivalent changes made according to the claims of the application still fall within the scope of the application.

In the embodiment of the present application, a terminal device defining at least one camera including at least one lift-able camera is used. By displaying the capturing interface and receiving a capturing instruction input by a user, the lift-able camera is enabled to capture multiple images from different heights. The terminal device processes the multiple images obtained to derive the processed result as the final photo, and outputs the same. By manipulating a lift-able camera rather than providing multiple cameras, not only can the number of hardware interfaces occupied be reduced to simplify the circuit structure of the terminal device, but also can the software calibration time be reduced, thereby improving the capturing efficiency.

## Claims

1. A capturing method applicable to a terminal device defining at least three cameras, the at least three cameras comprising at least two lift-able cameras, and the method comprising:
displaying (201) a capturing interface;
receiving (202) a capturing instruction; and
controlling (203) a second camera to capture from a fixed height according to height information corresponding to a capturing mode, and a third camera to capture from different heights to obtain a panoramic image,
wherein the second camera and the third camera are lift-able cameras, and after receiving the capturing instruction, the third camera is extended to a highest height, and then is retracted therefrom towards the terminal, continuously capturing the panoramic image during the retraction; and
the panoramic image captured by the third camera is fused with an image captured by the second camera to obtain a fused panoramic image, wherein the fusing comprises obtaining different image information from the panoramic image captured by the third camera and the image captured by the second camera and generating the fused panoramic image using the different image information, wherein the image captured by the second camera is used at a center position or a starting position or an ending position of the fused panoramic image.

2. The method according to claim 1, **characterized in that** when the image captured by the second camera is used at the center position of the fused panoramic image, the image captured by the second camera is used as a central axis of the fused panoramic image during the fusing process.

3. A capturing method applicable to a terminal device defining at least two cameras, the at least two cameras comprising at least one lift-able camera, and the method being **characterized by** comprising:
displaying (301) a capturing interface;
receiving (302) a capturing instruction; and
controlling (303) a lift-able camera to extend to a highest height and then retract therefrom towards the terminal, continuously capturing a panoramic image during the retraction,
wherein the terminal device further comprises a fixed camera in addition to the lift-able camera; and
when an automatic panoramic capturing instruction is received, the fixed camera is controlled to capture and output a fixed image, the lift-able camera outputs the panoramic image, and the fixed image and the panoramic image are fused to obtain a fused panoramic image, wherein the fusing comprises obtaining different image information from the panoramic image captured by the lift-able camera and the fixed image captured by the fixed camera and generating the fused panoramic image using the different image information, wherein the fixed image captured by the fixed camera is used at a center position or a starting position or an ending position of the fused panoramic image.

4. A mobile terminal (7000, 8000, 9000), **characterized by** comprising a processor (701, 801, 901), a memory (704, 804, 904), an input device (703, 803, 903), an output device (702, 802, 902), and cameras (705, 805, 905) that are mutually connected, wherein the memory (704, 804, 904) is configured to store a computer program that supports a capturing apparatus to execute the capturing method, the computer program comprises program instructions, and the processor is configured to call the program instructions to execute the capturing method according to any one of claims 1-3.

5. A computer-readable storage medium, **characterized by** storing thereon a computer program that comprises program instructions which, when being executed by a processor (701, 801, 901), implements the capturing method according to any one of claims 1-3.

## Patentansprüche

1. Aufnahmeverfahren, das auf eine Endgerätvorrichtung anwendbar ist, die mindestens drei Kameras definiert, wobei die mindestens drei Kameras mindestens zwei anhebbare Kameras umfassen, und wobei das Verfahren Folgendes umfasst:
Anzeigen (201) einer Aufnahmeschnittstelle;
Empfangen (202) einer Aufnahmeanweisung; und
Steuern (203) einer zweiten Kamera zum Aufnahmen aus einer festen Höhe gemäß Höheninformationen, die einem Aufnahmemodus entsprechen, und einer dritten Kamera zum Aufnehmen aus verschiedenen Höhen, um ein Panoramabild zu erhalten,
wobei die zweite Kamera und die dritte Kamera anhebbare Kameras sind und die dritte Kamera nach dem Empfangen der Aufnahmeanweisung auf eine höchste Höhe ausgefahren wird und dann von dort in Richtung des Endgeräts eingefahren wird, wobei das Panoramabild kontinuierlich während des Einfahrens aufgenommen wird; und
das von der dritten Kamera aufgenommene Panoramabild mit einem von der zweiten Kamera aufgenommenen Bild fusioniert wird, um ein fusioniertes Panoramabild zu erhalten, wobei das Fusionieren das Erhalten unterschiedlicher Bildinformationen aus dem von der dritten Kamera aufgenommenen Panoramabild und dem von der zweiten Kamera aufgenommenen Bild und das Erzeugen des fusionierten Panoramabilds unter Verwendung der unterschiedlichen Bildinformationen umfasst, wobei das von der zweiten Kamera aufgenommene Bild an einer zentralen Position oder einer Startposition oder einer Endposition des fusionierten Panoramabilds verwendet wird.

2. Verfahren nach Anspruch 1, **dadurch gekennzeichnet, dass**, wenn das von der zweiten Kamera aufgenommene Bild an der zentralen Position des fusionierten Panoramabilds verwendet wird, das von der zweiten Kamera aufgenommene Bild als eine zentrale Achse des fusionierten Panoramabilds während des Fusionsprozesses verwendet wird.

3. Aufnahmeverfahren, das auf eine Endgerätvorrichtung anwendbar ist, die mindestens zwei Kameras definiert, wobei die mindestens zwei Kameras mindestens eine anhebbare Kamera umfassen, und wobei das Verfahren **dadurch gekennzeichnet ist, dass** es Folgendes umfasst:
Anzeigen (301) einer Aufnahmeschnittstelle;
Empfangen (302) einer Aufnahmeanweisung; und
Steuern (303) einer anhebbaren Kamera, sodass sie auf eine höchste Höhe ausgefahren und dann von dort in Richtung des Endgeräts eingefahren wird, wobei während des Einfahrens kontinuierlich ein Panoramabild aufgenommen wird,
wobei die Endgerätvorrichtung ferner zusätzlich zu der anhebbaren Kamera eine feststehende Kamera umfasst; und
wenn eine automatische Panoramaaufnahmeanweisung empfangen wird, die feststehende Kamera gesteuert wird, um ein Standbild aufzunehmen und auszugeben, die anhebbare Kamera das Panoramabild ausgibt und das Standbild und das Panoramabild fusioniert werden, um ein fusioniertes Panoramabild zu erhalten, wobei das Fusionieren das Erhalten unterschiedlicher Bildinformationen aus dem von der anhebbaren Kamera aufgenommenen Panoramabild und dem von der feststehenden Kamera aufgenommenen Standbild und das Erzeugen des fusionierten Panoramabilds unter Verwendung der unterschiedlichen Bildinformationen umfasst, wobei das von der feststehenden Kamera aufgenommene Standbild an einer zentralen Position oder einer Startposition oder einer Endposition des fusionierten Panoramabilds verwendet wird.

4. Mobiles Endgerät (7000, 8000, 9000), **dadurch gekennzeichnet, dass** es einen Prozessor (701, 801, 901), einen Speicher (704, 804, 904), eine Eingabevorrichtung (703, 803, 903), eine Ausgabevorrichtung (702, 802, 902) und Kameras (705, 805, 905) umfasst, die miteinander verbunden sind, wobei der Speicher (704, 804, 904) so konfiguriert ist, dass er ein Computerprogramm speichert, das einen Aufnahmeapparat unterstützt, um das Aufnahmeverfahren auszuführen, das Computerprogramm Programmanweisungen umfasst und der Prozessor so konfiguriert ist, dass er die Programmanweisungen aufruft, um das Aufnahmeverfahren nach einem der Ansprüche 1 bis 3 auszuführen.

5. Computerlesbares Speichermedium, **gekennzeichnet durch** Speichern eines Computerprogramms darauf, das Programmanweisungen umfasst, die, wenn sie von einem Prozessor (701, 801, 901) ausgeführt werden, das Aufnahmeverfahren nach einem der Ansprüche 1 bis 3 implementieren.

## Revendications

1. Procédé de capture applicable à un dispositif terminal définissant au moins trois caméras, les au moins trois caméras comprenant au moins deux caméras relevables, et le procédé comprenant :
afficher (201) une interface de capture ;
recevoir (202) une instruction de capture ; et
commander (203) une deuxième caméra pour capturer à partir d'une hauteur fixe en fonction d'informations de hauteur correspondant à un mode de capture, et une troisième caméra pour capturer à partir de différentes hauteurs pour obtenir une image panoramique,
dans lequel la deuxième caméra et la troisième caméra sont des caméras pouvant être levées, et après réception de l'instruction de capture, la troisième caméra est étendue à une hauteur plus élevée, puis est rétractée de celle-ci vers le terminal, capturant en continu l'image panoramique pendant la rétractation ; et
l'image panoramique capturée par la troisième caméra est fusionnée avec une image capturée par la deuxième caméra pour obtenir une image panoramique fusionnée, la fusion comprenant l'obtention d'informations d'image différentes à partir de l'image panoramique capturée par la troisième caméra et de l'image capturée par la deuxième caméra et la génération de l'image panoramique fusionnée à l'aide des différentes informations d'image, l'image capturée par la deuxième caméra étant utilisée à une position centrale ou à une position de départ ou à une position de fin de l'image panoramique fusionnée.

2. Procédé selon la revendication 1, **caractérisé en ce que** lorsque l'image capturée par la seconde caméra est utilisée au niveau de la position centrale de l'image panoramique fusionnée, l'image capturée par la seconde caméra est utilisée en tant qu'axe central de l'image panoramique fusionnée pendant le processus de fusion.

3. Procédé de capture applicable à un dispositif terminal définissant au moins deux caméras, les au moins deux caméras comprenant au moins une caméra pouvant être soulevée, et le procédé étant **caractérisé en ce qu'**il comprend :
afficher (301) une interface de capture ;
recevoir (302) une instruction de capture ; et
commander (303) une caméra pouvant être soulevée pour qu'elle s'étende jusqu'à une hauteur la plus élevée, puis se rétracte de celle-ci vers le terminal, capturer en continu une image panoramique pendant la rétractation,
dans lequel le dispositif terminal comprend en outre une caméra fixe en plus de la caméra relevable ; et
lorsqu'une instruction de capture panoramique automatique est reçue, la caméra fixe est commandée pour capturer et sortir une image fixe, la caméra pouvant être soulevée sort l'image panoramique, et l'image fixe et l'image panoramique sont fusionnées pour obtenir une image panoramique fusionnée, la fusion comprenant l'obtention d'informations d'image différentes à partir de l'image panoramique capturée par la caméra pouvant être soulevée et de l'image fixe capturée par la caméra fixe et la génération de l'image panoramique fusionnée à l'aide des informations d'image différentes, l'image fixe capturée par la caméra fixe étant utilisée à une position centrale ou une position de départ ou une position de fin de l'image panoramique fusionnée.

4. Terminal mobile (7000, 8000, 9000), **caractérisé en ce qu'**il comprend un processeur (701, 801, 901), une mémoire (704, 804, 904), un dispositif d'entrée (703, 803, 903), un dispositif de sortie (702, 802, 902), et des caméras (705, 805, 905) qui sont mutuellement connectées, dans lequel la mémoire (704, 804, 904) est configurée pour stocker un programme d'ordinateur qui supporte un appareil de capture pour exécuter le procédé de capture, le programme d'ordinateur comprend des instructions de programme, et le processeur est configuré pour appeler les instructions de programme pour exécuter le procédé de capture selon l'une quelconque des revendications 1 à 3.

5. Support de stockage lisible par ordinateur, **caractérisé par** le stockage sur celui-ci d'un programme d'ordinateur qui comprend des instructions de programme qui, lorsqu'elles sont exécutées par un processeur (701, 801, 901), mettent en oeuvre le procédé de capture selon l'une quelconque des revendications 1 à 3.
